# EUROPÄISCHE PATENTANMELDUNG

(11) **EP 1 180 617 A1**
(43) Veröffentlichungstag der Anmeldung: **20.02.2002**
(21) Anmeldenummer: 00117678.3
(22) Anmeldetag: 17.08.2000
(51) Int. Cl.: F16H 55/14

(54) **Zahnradgetriebe mit einem Dämpfungselement**

(71) Anmelder: Ford Global Technologies, Inc., Dearborn, Michigan 48136 (US)
(72) Erfinder: Mohr, Christian, 54290 Trier (DE); Odermatt, Manfred, 53773 Hennef/Sieg (DE)
(74) Vertreter: Bonsmann, Manfred, Dipl.-Ing.

(57) **Zusammenfassung**

Bei einem Zahnradgetriebe mit zwei ineinandergreifenden Zahnrädern (41, 42) ist dem ersten Zahnrad (41) ein Dämpfungselement zugeordnet, insbesondere ein Dämpfungsring (46) oder eine Dämpfungsbeschichtung, welcher bzw. welche auf dem zweiten Zahnrad (42) abrollt. Der Dämpfungsring (46) bewegt sich dabei vorzugsweise in einer umlaufenden Nut (47) in der zahnreihe des zweiten Zahnrades (42).

## Beschreibung

Die Erfindung betrifft ein Zahnradgetriebe mit einem ersten und einem zweiten Zahnrad, die ineinandergreifen, und mit einem zwischen den Zahnrädern wirkenden Dämpfungselement.

Ein Zahnradgetriebe der eingangs genannten Art ist aus der US 3 548 673 bekannt. Mit einem derartigen Zahnradgetriebe soll das beim Betrieb des Getriebes auftretende Rasseln oder Klappern der Zahnräder vermindert beziehungsweise ausgeschaltet werden. Das Klappern hat seinen Grund darin, dass die Zähne der Zahnräder in der Regel mit einem gewissen Spiel ineinandergreifen, so dass es bei Winkelbeschleunigungen des antreibenden Zahnrades zu einer Geräuschentwicklung kommen kann. Diese macht sich insbesondere bei Wechselgetrieben für Kraftfahrzeuge störend bemerkbar, da es dort durch unvermeidliche Drehzahlschwankungen des Verbrennungsmotors ständig zu Winkelbeschleunigungen des Antriebszahnrades kommt.

Zur Unterdrückung des Rasselns wird daher in der US 3 548 673 vorgeschlagen, das Zahnradgetriebe parallel zu einem Friktionsgetriebe einzusetzen. Letzteres wird dadurch realisiert, dass koaxial neben jedem Zahnrad eine Reibscheibe mit einer zylindrischen Abrollfläche angeordnet wird, wobei die Abrollfläche der neben dem ersten Zahnrad angeordneten ersten Reibscheibe auf der Abrollfläche der neben dem zweiten Zahnrad angeordneten zweiten Reibscheibe abrollt. Nachteilig bei einer derartigen Konstruktion ist jedoch, dass die bei jedem Zahnrad vorzusehenden Reibscheiben erhöhte Kosten bedeuten. Ferner verlängern sie die axiale Baulänge des Getriebes und laufen somit dem Trend zu einer Verkleinerung und Gewichtsreduzierung der Fahrzeugkomponenten entgegen.

Weitere Maßnahmen zur Bekämpfung der störenden Klappergeräusche eines Getriebes bestehen in einer möglichst schalldichten Isolierung des Getriebes oder in einer Erhöhung der Ölmasse im Getriebe. Während die Schalldämpfung die Ursache des Rasselns nicht bekämpft und in ihrer Wirksamkeit fraglich ist, bedeutet eine zusätzliche Öldämpfung im Getriebe durch das benötigte zusätzliche Ölvolumen beträchtliche Zusatzkosten.

Vor diesem Hintergrund war es Aufgabe der vorliegenden Erfindung, ein Zahnradgetriebe der eingangs genannten Art derart zu verbessern, dass auf kostengünstige und wirksame Weise eine Geräuschdämpfung erzielt wird.

Diese Aufgabe wird durch ein Zahnradgetriebe mit den Merkmalen des Anspruchs 1 gelöst. Vorteilhafte Ausgestaltungen sind in den Unteransprüchen enthalten.

Das Zahnradgetriebe weist gemäß Anspruch 1 mindestens ein erstes und ein zweites Zahnrad auf, die ineinandergreifen, sowie ein zwischen den Zahnrädern wirkendes Dämpfungselement, wobei das Dämpfungselement dem ersten Zahnrad zugeordnet ist, elastischer als das erste Zahnrad ausgebildet ist und zwischen den äußeren Stirnenden der Zahnflankenbereiche des zweiten Zahnrades auf diesem abrollt.

Durch die im Rahmen der Erfindung vorgesehene Verwendung eines elastischeren Materials als das des ersten Zahnrades können die entstehenden Schwingungen gedämpft werden. Weiterhin wird im Rahmen der Erfindung vorgeschlagen, dass das Dämpfungselement zwischen den äußeren Stirnenden der Zahnflankenbereiche des zweiten Zahnrades auf diesem abrollt. Hierzu können die Zahnflanken des zweiten Zahnrades den Abrollbereich für das Dämpfungselement darstellen, oder es kann z.B. im Bereich zwischen den äußeren Stirnenden der Zahnflankenbereiche des zweiten Zahnrades eine radial umlaufende Nut vorgesehen sein, die als Abrollbereich für das Dämpfungselement dient. Der Abrollbereich liegt im Rahmen der Erfindung innerhalb der Erstreckung des zweiten Zahnrades - im Unterschied zum o.g. Stand der Technik, bei dem das Dämpfungselement außerhalb des Zahnradkörpers abrollt.

Ein wesentlicher Vorteil der Erfindung besteht darin, dass die axiale Baulänge des Zahnradgetriebes durch die Maßnahmen zur Schwingungsdämpfung nicht oder im Vergleich zum Stand der Technik nur geringfügig vergrößert wird.

Ein weiterer Vorteil besteht darin, dass - anders als bei der US 3 548 673 - auf ein zusätzliche Kosten verursachendes zweites Dämpfungselement, welches mit dem ersten Dämpfungselement zusammenwirkt, verzichtet werden kann, denn im Rahmen der Erfindung ist das Dämpfungselement besonders vorteilhaft nur dem ersten Zahnrad zugeordnet.

In einer vorteilhaften Ausgestaltung der Erfindung ist das Dämpfungselement als Dämpfungsring ausgebildet, welcher koaxial zum ersten Zahnrad angeordnet ist und eine zum ersten Zahnrad koaxiale zylindrische Abrollfläche aufweist. Die Definition einer zylindrischen Abrollfläche soll dabei in einem weiten Sinne auch solche Situationen erfassen, bei denen theoretisch die Abrollfläche zu einer Linie (Kreislinie) zusammengeschrumpft ist.

Diese erfindungsgemäße Ausführungsform hat den Vorteil, dass das Dämpfungselement einstückig als Ring ausgestaltet und somit unverlierbar am ersten Zahnrad angeordnet werden kann. Des weiteren kann das Zusammenwirken mit dem zweiten Zahnrad auf der gesamten Abrollfläche des Dämpfungsringes stattfinden, so dass die Belastung gleichmäßiger verteilt und die Lebensdauer verlängert wird.

Gemäß einer weiteren bevorzugten Ausgestaltung des Zahnradgetriebes ist der erwähnte Dämpfungsring in einer auf dem ersten Zahnrad umlaufenden Nut angeordnet. Diese Nut kann axial gesehen neben den Zähnen oder im Zahnbereich selbst angeordnet sein. Im letzten Falle ist die Nut demnach koaxial um das erste Zahnrad umlaufend in die Zähne dieses Zahnrades eingeschnitten. Die Verwendung einer Nut hat den Vorteil, dass der Dämpfungsring formschlüssig in dieser Nut gelagert werden kann. Eine zusätzliche Befestigung - wie zum Beispiel durch einen Kleber - ist daher nicht unbedingt erforderlich. Es kann im Gegenteil sogar positiv sein, wenn der Dämpfungsring nicht in der Nut fixiert ist und somit relativ zum ersten Zahnrad rotieren kann, da auf diese Weise der Verschleiß des Dämpfungsringes herabgesetzt beziehungsweise gleichmäßig über dem Dämpfungsring verteilt werden kann.

Der Dämpfungsring und das zweite Zahnrad können so angeordnet beziehungsweise dimensioniert sein, dass der Dämpfungsring auf den Kuppen der Zähne des zweiten Zahnrades abrollt. Dies ist insbesondere dann der Fall, wenn der Dämpfungsring in etwa auf der radialen Höhe der Zahngründe des ersten Zahnrades verläuft.

Gemäß einer Weiterbildung der Erfindung kann das zweite Zahnrad eine in die Zähne des Zahnrades eingeschnittene, koaxial um die Achse des zweiten Zahnrades umlaufende Nut aufweisen, in welcher der Dämpfungsring abrollt. Die Nut im zweiten Zahnrad kann bis zum Zahngrund der Zähne des zweiten Zahnrades durchgehen, sie kann jedoch auch auf einer Zwischenhöhe der Zähne enden. Im ersten Fall ergibt sich ein durchgehender kreisförmiger beziehungsweise zylindrischer Boden der Nut, auf welchem der Dämpfungsring abrollen kann. Wenn die Zähne des zweiten Zahnrades dagegen nur bis auf eine mittlere Höhe eingeschnitten sind, hat der Boden der Nut einen welligen Verlauf entsprechend dem Profil des zweiten Zahnrades, und der Dämpfungsring kommt in erster Linie mit den erhöhten Einschnitten in den Zähnen des zweiten Zahnrades in Kontakt. Die Anordnung einer Nut am zweiten Zahnrad hat den Vorteil, dass eine sichere Führung für den Dämpfungsring ausgebildet wird und dass sich die axiale Baulänge des Zahnradgetriebes nicht erhöht.

Der Dämpfungsring kann torusförmig (ähnlich einem herkömmlichen Dämpfungsring bzw. "O-Ring") oder scheibenringförmig (ähnlich einer Unterlegscheibe) ausgebildet sein.

In einer alternativen Ausführungsform der Erfindung ist das Dämpfungselement als im Bereich wenigstens eines Teils der Zahngründe und/oder der Zahnkuppen und/oder der Zahnflanken des ersten Zahnrades aufgebrachte Dämpfungsbeschichtung ausgebildet. Bei dieser Ausführungsform ist somit kein separat ausgebildeter Dämpfungsring erforderlich. Der Ort der Aufbringung der Beschichtung hängt von der jeweiligen Ausbildung der Zahnräder ab, insbesondere erweist sich bei schrägverzahnten Zahnradpaaren eine Beschichtung der Zahnflanken als besonders vorteilhaft. Die Dämpfungsbeschichtung kann durch Kleben, Gießen oder eine andere geeignete Art mit dem ersten Zahnrad verbunden werden.

Vorzugsweise besteht das Dämpfungselement aus einem elastomeren Material, welches die erforderliche Abriebfestigkeit und Temperaturbeständigkeit aufweist. Geeignet sind hier alle bekannten elastischen und mechanisch dämpfenden Werkstoffe, die zum Beispiel auch zur Herstellung von Stoßdämpfern, Puffern, Dichtungen, Schläuchen und dergleichen eingesetzt werden. Insbesondere kann der Dämpfungsring aus Nylon, Acetal oder Polyäthersulfon bestehen.

In einer weiteren vorteilhaften Ausgestaltung der Erfindung ist das Dämpfungselement aus einem Metall ausgebildet, welches weicher als das Material der Zahnräder ist. Vorzugsweise handelt es sich hierbei um Kupfer oder ein Metall vergleichbarer Härte. Das Dämpfungselement kann dabei als metallischer Dämpfungsring oder als weichmetallische Beschichtung ausgebildet sein.

Im Folgenden wird die Erfindung mit Hilfe der Figuren beispielhaft näher erläutert. Es zeigen:
- Fig. 1: einen Querschnitt durch zwei Zahnräder mit einem in einer Nut angeordneten Dämpfungsring;
- Fig. 2: einen Querschnitt durch zwei Zahnräder mit einem scheibenförmigen Dämpfungsring, welcher auf einer Schulter des ersten Zahnrades steht;
- Fig. 3: eine alternative Ausführungsform zu dem Zahnradgetriebe von Figur 2, bei der der Dämpfungsring an einer Stirnfläche des ersten Zahnrades befestigt ist;
- Fig. 4: ein Zahnradgetriebe mit umlaufenden Nuten im mittleren axialen Bereich der Zähne;
- Fig. 5: ein Zahnradgetriebe mit umlaufenden Nuten im Randbereich der Zähne;
- Fig. 6a und b: einen Querschnitt quer zur Drehachse durch den Kontaktbereich der Zahnräder von Figur 4 oder 5.

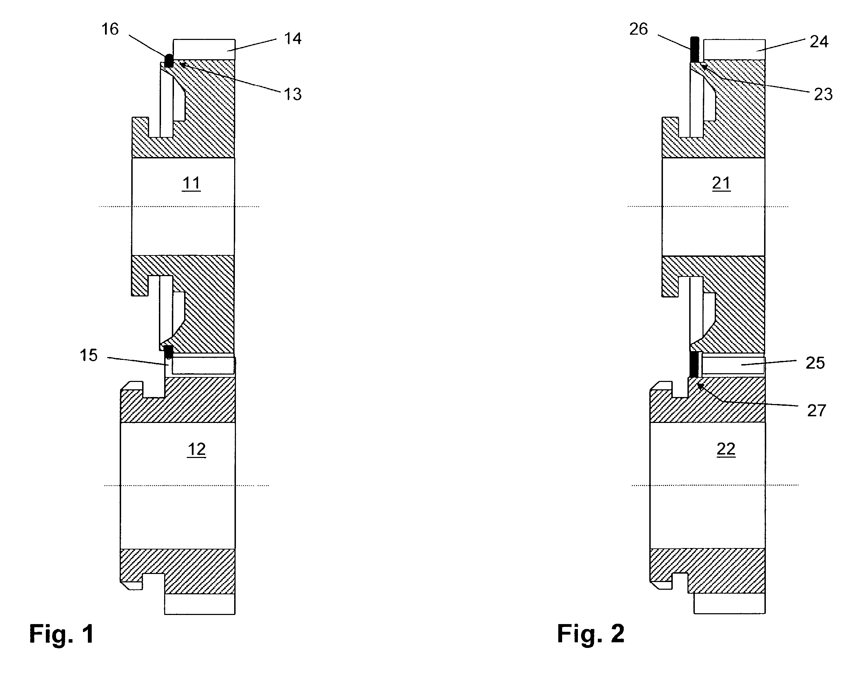

Figur 1 zeigt einen Querschnitt durch ein erstes Zahnrad 11 und ein zweites Zahnrad 12 eines Zahnradgetriebes, welcher die beiden Drehachsen der Zahnräder enthält. Im mittleren Teil der Figur ist erkennbar, dass die Zähne 14 des ersten Zahnrades 11 mit den Zähnen 15 des zweiten Zahnrades 12 in bekannter Weise in Eingriff stehen bzw. kämmen, um eine Drehbewegung von einem Zahnrad auf das andere zu übertragen.

Des weiteren ist erkennbar, dass das erste Zahnrad 11 axial benachbart zu seinen Zähnen 14 eine umlaufende Nut 13 aufweist, in welcher ein scheibenringförmiger und an der radialen Außenseite abgerundeter Dämpfungsring 16 angeordnet ist. Der Dämpfungsring kann aus einem elastomeren Material wie einem Gummi oder einem Kunststoff bestehen. Im Kontaktbereich der beiden Zahnräder 11 und 12 kommt die radiale Außenseite des Dämpfungsringes 16 mit den Kuppen der Zähne 15 des zweiten Zahnrades 12 in Kontakt. Durch diesen Kontakt werden im Rahmen des Spiels stattfindende Bewegungen des zweiten Zahnrades 12 relativ zum ersten Zahnrad 11 gebremst, so dass das üblicherweise auftretende Klappern der Zahnräder unterdrückt wird.

Wie aus Figur 1 weiterhin erkennbar ist, erfordert die erfindungsgemäße Lösung keine Vergrößerung der axialen Baulänge des Zahnradgetriebes. Konstruktiv muss nur das erste Zahnrad 11 verändert werden, während das zweite Zahnrad 12 gegenüber einer herkömmlichen Konstruktion unverändert bleiben kann.

Der Dämpfungsring 16 kann lose in der Nut 13 angeordnet werden oder zum Beispiel durch einen Kleber hierin fixiert sein. Die lose Anordnung hat den Vorteil, dass der Dämpfungsring gegebenenfalls leicht ausgewechselt werden kann. Weiterhin kann der Dämpfungsring bei einer losen Anordnung relativ zum ersten Zahnrad 11 rotieren, so dass nicht immer dieselben Stellen des Dämpfungsringes 16 mit den Zähnen 15 des zweiten Zahnrades 12 in Kontakt treten. Auf diese Weise kann der Verschleiß des Dämpfungsringes 16 vergleichmäßigt und zeitlich hinausgeschoben werden.

In Figur 2 ist eine alternative Ausgestaltung eines erfindungsgemäßen Zahnradgetriebes in einer Darstellung entsprechend Figur 1 gezeigt. Gleiche bzw. ähnliche Teile wie in Figur 1 sind dabei mit um 10 erhöhten Bezugsziffern nummeriert.

Im Unterschied zu Figur 1 ist der Dämpfungsring 26 stärker scheibenförmig ausgebildet und nicht in einer Nut liegend, sondern auf einer Schulter 23 stehend angeordnet. Weiterhin erstreckt sich der Dämpfungsring 26 in radialer Richtung etwas über den Radius der Zahnkuppen der Zähne 24 des ersten Zahnrades 21 hinaus. Hierdurch tritt der Dämpfungsring 26 mit dem zweiten Zahnrad 22 in einem radialen Abstand zur Achse des zweiten Zahnrades 22 in Kontakt, welcher dem Radius des Zahngrundes zwischen den Zähnen 25 des zweiten Zahnrades 22 entspricht. Die Zähne 25 des zweiten Zahnrades 22 sind entsprechend in axialer Richtung verkürzt ausgebildet, so dass der Dämpfungsring 26 auf einer zylindrischen Abrollfläche 27, die koaxial zur Achse des zweiten Zahnrades 22 liegt, abrollen kann. Durch das Abrollen auf einer zylindrischen Fläche ergibt sich eine ständig gleichbleibende Wirkung des Dämpfungsringes 26 und ein über den Umfang des Dämpfungsringes 26 gleichmäßig verteilter Verschleiß.

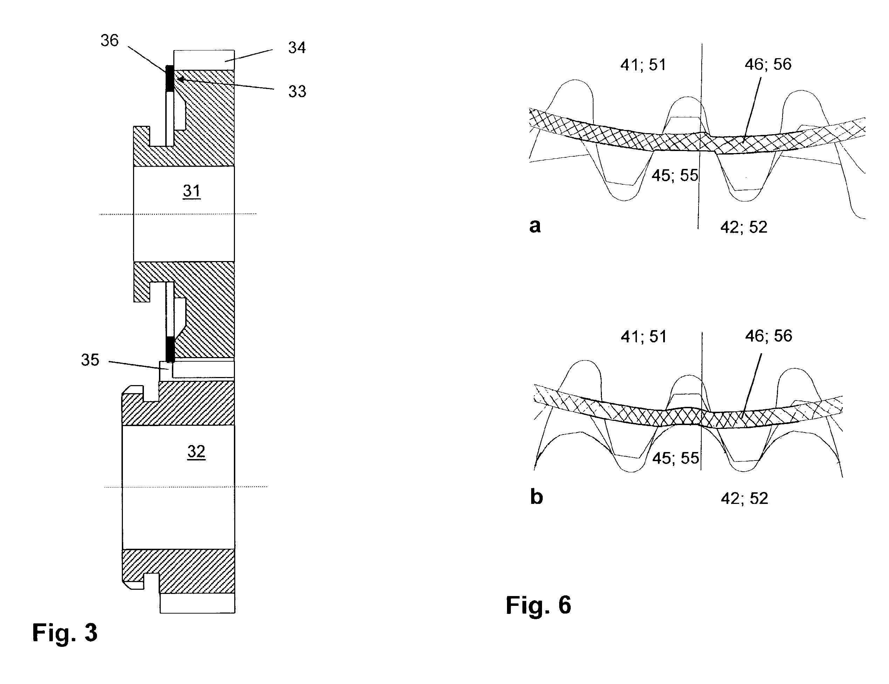

Figur 3 zeigt eine Abwandlung der Anordnung von Figur 2, wobei wiederum gleiche bzw. ähnliche Teile wie in Figur 2 mit um 10 erhöhten Bezugsziffern nummeriert sind.

Bei der Abwandlung ist der scheibenförmige Dämpfungsring 36 an einer Stirnseite des ersten Zahnrades 31 befestigt. Zur Befestigung kann zum Beispiel ein temperaturbeständiger Kleber wie insbesondere ein Epoxidkleber verwendet werden. Der Dämpfungsring 36 steht bei dieser Anordnung nicht auf einem radialen Absatz beziehungsweise einer Schulter des ersten Zahnrades 32.

Des weiteren ist der Außenradius des Dämpfungsringes 36 bei der Ausgestaltung gemäß Figur 3 ähnlich wie bei Figur 1 annähernd gleich dem Radius des Zahngrundes zwischen den Zähnen 34 des ersten Zahnrades 31 gewählt, so dass der Dämpfungsring 36 auf den Kuppen der Zähne 35 des zweiten Zahnrades 32 abrollt.

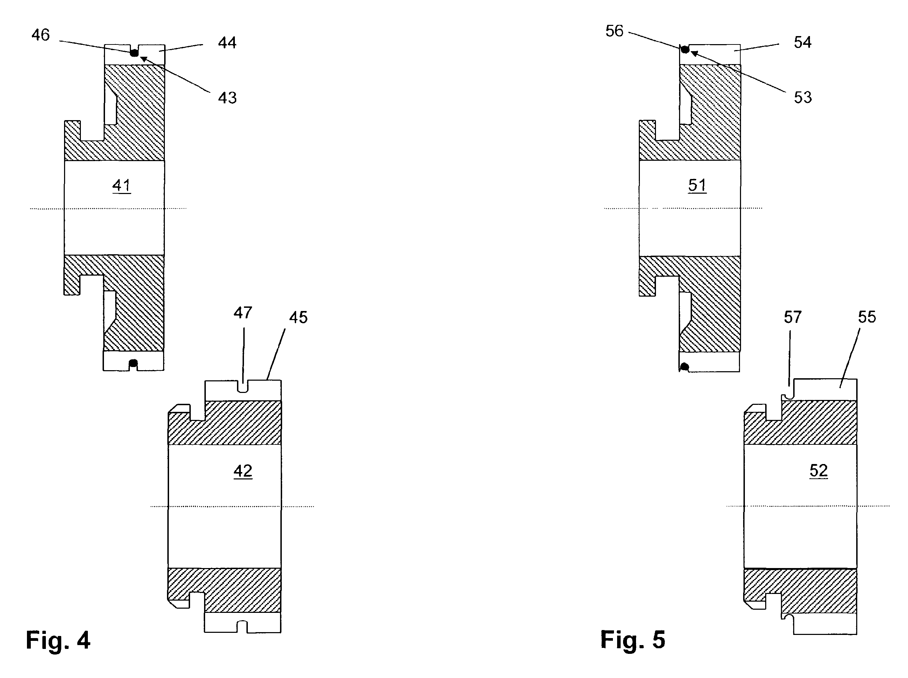

In den Figuren 4 und 5 ist eine alternative Ausgestaltung dargestellt, bei welcher ein torusförmiger Dämpfungsring 46 ("O-Ring") in einer umlaufenden Nut 43 im ersten Zahnrad 41 angeordnet ist. Das erste Zahnrad 41 und das zweite Zahnrad 42 sind anders als bei den Figuren 1 bis 3 in axialer Richtung auseinandergezogen dargestellt, um die Ausgestaltung der Zähne 44 beziehungsweise 45 besser erkennbar zu machen. Gleiche bzw. ähnliche Teile wie in vorangehenden Figuren sind wiederum mit um 10 erhöhten Bezugsziffern nummeriert.

In Figur 4 ist die Nut 43 axial gesehen etwa in der Mitte der Zähne 44 in die Zahnreihe eingelassen. Im dargestellten Beispiel erstreckt sich die Nut 43 radial nicht ganz bis zum Zahngrund zwischen den Zähnen 44. Ebenso ist es jedoch auch denkbar, dass sich die Nut bis zum Zahngrund erstrecken könnte. Der Dämpfungsring 46 wird in der Nut 43 formschlüssig gehalten.

Durch die Zähne 45 des zweiten Zahnrades 42 verläuft ebenfalls axial etwa mittig eine zweite Nut 47. Bei der Drehung der Zahnräder 41 und 42 umgreift die zweite Nut 47 den Dämpfungsring 46. Der Dämpfungsring 46 hat durch die in Figur 4 gezeigte Anordnung eine Lage, in der er sowohl in tangentialer als auch in radialer Richtung Bremskräfte auf die beteiligten Zahnräder ausübt. Diese Lage des Dämpfungsringes 46 im Eingriffsbereich der beiden Zahnräder 41 und 42 ist in den Figuren 6a, 6b in einem Querschnitt senkrecht zur Drehachse der Zahnräder gezeigt. Figur 6b zeigt dabei eine Ausgestaltung, bei welcher die Zähne 45 des zweiten Zahnrades 42 im Bereich der Nut 47 eine Abrundung aufweisen, welche zu einem glatteren Zusammenwirken mit dem Dämpfungsring 46 führt.

In Figur 5 ist eine alternative Anordnung dargestellt, bei welcher die durch die Zähne 54 des ersten Zahnrades 51 verlaufende Nut 53 axial und radial im Randbereich der Zähne 54 angeordnet ist. Dementsprechend ist die korrespondierende Nut 57 in den Zähnen 55 des zweiten Zahnrades 52 im axialen Randbereich dieser Zähne angeordnet und erstreckt sich radial gesehen annähernd bis auf den Zahngrund der Zähne 55.

Selbstverständlich ist es möglich, die Details der in den Figuren gezeigten verschiedenen Ausgestaltungen miteinander zu kombinieren beziehungsweise untereinander auszutauschen.

## Patentansprüche

1. Zahnradgetriebe mit einem ersten (11; 21; 31; 41; 51) und einem zweiten (12; 22; 32; 42; 52) Zahnrad, die ineinandergreifen, und mit einem zwischen den Zahnrädern wirkenden Dämpfungselement, **dadurch gekennzeichnet, dass** das Dämpfungselement dem ersten Zahnrad zugeordnet ist, elastischer als das erste Zahnrad ausgebildet ist und zwischen den äußeren Stirnenden der Zahnflankenbereiche des zweiten Zahnrades auf diesem abrollt.

2. Zahnradgetriebe nach Anspruch 1, **dadurch gekennzeichnet, dass** das Dämpfungselement als auf dem zweiten Zahnrad (12; 22; 32; 42; 52) abrollender Dämpfungsring ausgebildet ist, welcher koaxial zum ersten Zahnrad (11; 21; 31; 41; 51) angeordnet ist und eine koaxiale zylindrische Abrollfläche aufweist.

3. Zahnradgetriebe nach Anspruch 1 oder 2, **dadurch gekennzeichnet, dass** der Dämpfungsring (16; 46; 56) in einer auf dem ersten Zahnrad umlaufenden Nut (13; 43; 53) angeordnet ist.

4. Zahnrad nach einem der Ansprüche 1 bis 3, **dadurch gekennzeichnet, dass** der Dämpfungsring (16; 36) auf den Kuppen der Zähne (15; 35) des zweiten Zahnrades (12; 32) abrollt.

5. Zahnradgetriebe nach einem der Ansprüche 1 bis 4, **dadurch gekennzeichnet, dass** das zweite Zahnrad (42; 52) eine in die Zähne (45; 55) eingeschnittene, koaxial umlaufende Nut (47; 57) aufweist, in der der Dämpfungsring (46; 56) abrollt.

6. Zahnradgetriebe nach einem der Ansprüche 1 bis 5, **dadurch gekennzeichnet, dass** das zweite Zahnrad (22) eine zylindrische Abrollfläche (27) aufweist, auf der der Dämpfungsring (26) abrollt.

7. Zahnradgetriebe nach mindestens einem der Ansprüche 1 bis 6, **dadurch gekennzeichnet, dass** der Dämpfungsring torusförmig (46; 56) oder scheibenförmig (16; 26; 36) ausgebildet ist.

8. Zahnradgetriebe nach Anspruch 1, **dadurch gekennzeichnet, dass** das Dämpfungselement als im Bereich wenigstens eines Teils der Zahngründe und/oder der Zahnkuppen und/oder der Zahnflanken des ersten Zahnrades aufgebrachte Dämpfungsbeschichtung ausgebildet ist.

9. Zahnradgetriebe nach Anspruch 8, **dadurch gekennzeichnet, dass** die Zahnräder eine Schrägverzahnung aufweisen, und dass das Dämpfungselement als im Bereich wenigstens eines Teils der Zahnflanken des ersten Zahnrades aufgebrachte Dämpfungsbeschichtung ausgebildet ist.

10. Zahnradgetriebe nach einem der Ansprüche 1 bis 9, **dadurch gekennzeichnet, dass** der Dämpfungsring (16; 26; 36; 46; 56) aus einem elastomeren Material besteht.

11. Zahnradgetriebe nach einem der Ansprüche 1 bis 9, **dadurch gekennzeichnet, dass** das Dämpfungselement aus einem Metall besteht, welches weicher als das Material der Zahnräder ist.
